# EUROPEAN PATENT APPLICATION

(11) **EP 1 798 432 A2**
(43) Date of publication of application: **20.06.2007**
(21) Application number: 06125965.1
(22) Date of filing: 12.12.2006
(51) Int. Cl.: F16C 13/00, F16N 31/00

(54) **Method and equipment for the removal of oil from a variable crown roll**

(30) Priority: 13.12.2005 FI 20051276
(71) Applicant: Metso Paper, Inc., 00130 Helsinki (FI)
(72) Inventor: Kupiainen, Seppo, 40270, Palokka (FI)
(74) Representative: TBK-Patent

(57) **Abstract**

Method and equipment for the removal of oil from a paper, board or finishing machine roll, especially preferably from a so-called variable crown roll.

The characteristic feature of the method and equipment according to the invention, in which method and equipment the oil accumulating inside the roll (10) is collected in a suitable location (19) inside the roll (10) and removed from there with a pump, is that oil or oil and air are removed from inside the roll (32) using a self-priming centrifugal pump (30, 30', 30"; 60, 70).

## Description

The present invention concerns a method and equipment for the removal of oil from a paper, board or finishing machine roll, especially preferably from a so-called variable crown roll or belt roll.

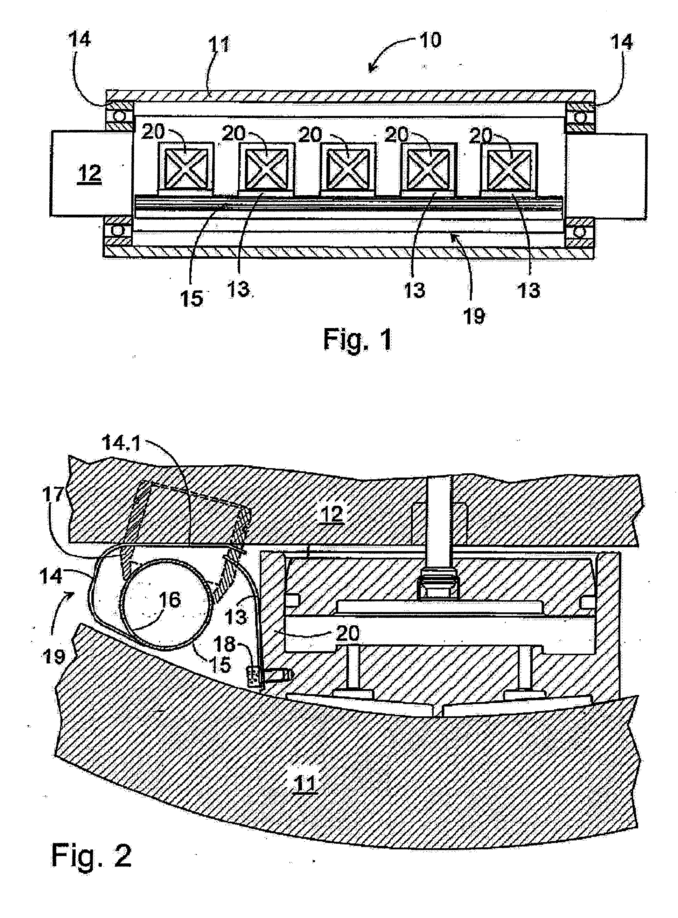

The paper industry uses not only rolls where the entire roll with its shaft revolves on bearings which are installed outside the ends of the roll, but also rolls which have a dead shaft, over which there is usually a revolving cylindrical metallic or non-metallic shell mounted on bearings by its ends. In many cases, for example loading shoes are arranged inside such a roll to make the roll curve in a desired direction. One example of such a roll structure is presented in FI patent 115790B discussed in conjunction with Figures 1 and 2. In other words, the dead shaft of the roll is a rigid roll beam, with several loading shoes arranged over its length. These loading shoes are composed of short hydraulic cylinders, with pressurized oil led under the end of the cylinder which serves as an actual loading shoe so that the end of the cylinder presses the roll shell against the inner surface and makes the roll deflect. In order to reduce friction, one or more holes are arranged at the end of the cylinder through which holes oil flows to lubricate the contact surface between the loading shoe and the roll shell. Naturally, this oil travels outside the loading shoe and starts to revolve with the inner surface of the roll shell. Moreover, oil can be injected on the inner surface of the roll shell for either heating or cooling purposes.

The said oil causes many types of disadvantages. First of all, it naturally consumes power in proportion to the volume of oil inside the roll as the oil drags along the surface of the roll shell or when the oil revolves with the roll. The problem is aggravated as the size of rolls grows in line with the growing size of paper machines. The greater the diameter of the roll and the longer the roll, the more oil leaks from between the roll shell and the loading shoe. Another problem is created by the fact that air is mixed with the oil circulating on the surface of the roll shell, especially when the oil film revolving with the roll hits the stationary loading shoes. It is very difficult to remove this type of mixture of air and oil from the roll using any conventional solution.

Known technologies comprise many ways in which to return oil from a variable crown roll to the hydraulic unit. Presently, this is most often carried out by means of gravity, i.e. by arranging a continuously descending return piping between the roll and the tank of the hydraulic unit. However, this arrangement restricts the placing of equipment, because the hydraulic unit cannot be taken very far from the roll.

In its simplest configuration, the oil removal equipment is composed of a vat arranged inside the roll shell, into which vat the oil flows along the outer surface of the loading shoes or assisted by a special doctor, and of a gravity pipe or channel which comes out of the vat, with the pipe or channel naturally being continuously descending. These types of solutions have been intensified for example by means of various equipment described in FI patent 115790C, used for forming a jet of the oil located on the inner surface of the roll shell, with the jet led into the said vat or similar. In other words, the solution employs the kinetic energy of the oil circulating on the surface of the roll shell. In addition to the above-mentioned stationary solutions which do not consume energy, oil removal can be intensified in the known manner by using several other methods, which also involve certain problems.

First of all, pneumatic air can be supplied inside the roll, which actually accelerates the removal of oil from the roll. The problem here is the sealing of the roll, mixing of air with the oil, and the fact that the return pipe must still be continuously descending.

Another method is to use a vacuum fan, which naturally also intensifies the removal of oil from the roll. However, the drawbacks include the fact that the return pipe must still be continuously descending and that the use of a vacuum fan requires an oil/air separator and a drop separator, because the fan usually used in this application cannot withstand oil. Also, the exhaust air from the fan must not be emitted to the environment, because it always contains some oil mist, which is why the exhaust air must be led back to the roll in a pipe. Extra costs are also caused by the additional piping to the fan and by the fact that both the fan and the back-up fan, which is necessary in view of the operation of the mill, are extra machines.

The use of a displacement pump in the oil removal line has also been experimented with. For example, publication FI-U-980588 discusses the use of a screw pump or similar device in oil removal. In fact, a displacement pump intensifies the removal of oil from the roll, and in this case the return pipe does not have to be descending, which makes the location of equipment free. However, the problem is that especially during the start-up of the roll, the pump may have to run dry, which is why it requires a separate lubrication line. Moreover, the purchase and maintenance costs of a displacement pump are high.

The use of a normal centrifugal pump in the oil removal line of a roll has also been considered. This solution, like all other pump solutions, naturally improves the removal of oil from the roll. A conventional centrifugal pump has an inexpensive purchasing price, and its maintenance costs are small. The oil return pipe can be arranged freely, i.e. it does not have to be descending. The location of an ordinary centrifugal pump is also very free. The drawback, however, is that an ordinary centrifugal pump requires a pumping vessel with level control (level measurement for example by means of pressure transmitter, and a control valve on the discharge side of the pump). An ordinary centrifugal pump cannot withstand the pump being filled with air as the pump rotates. When there is a sufficient volume of oil in the pump again, an air bubble remains in front of the impeller by the effect of centrifugal force and prevents a normal flow.

The present invention solves the above-mentioned problems and disadvantages by using a so-called self-priming centrifugal pump in the oil removal line of a variable crown roll. Unlike an ordinary, normal centrifugal pump, a self-priming centrifugal pump can remove air both from the suction pipe and from the impeller of the pump, and after this it can pump liquid in a normal manner.

The method and equipment according to the present invention achieve for example the following advantages: A centrifugal pump withstands dry running better than a displacement pump, because a centrifugal pump has larger clearances and no parts which chafe each other. A self-priming centrifugal pump does not need a separate pumping vessel, level control or flow control, because it can withstand situations where the suction pipe is filled with air. When there is liquid again, the pump can suck out the air in the suction pipe and continue normal pumping. It is also better in pumping liquids which contain air bubbles than a displacement pump. As compared to vacuum removal, a self-priming centrifugal pump does not need additional piping. The hydraulic unit can be placed feely, because no descending pipes are required. The roll can also be located below the machine level. Examples of this arrangement include the lower roll of a supercalender and the lower roll of a so-called OptiLoad™ calender or the belt roll in the lower position of a press, for example an extended nip press, since the outlet pipe does not need to be descending.

The purpose of the present invention is to accomplish a new type of a method and equipment, which enables the removal of oil from the roll in any position on the paper machine. The characteristic feature of the method according to the invention for removing oil from a roll on a paper, board or finishing machine, in which method the oil accumulating inside the roll is collected in a suitable location inside the roll and removed from there with a pump into an oil collection vat, is that oil or oil and air are removed from inside the roll using a self-priming centrifugal pump.

Correspondingly, the characteristic feature of the equipment according to the invention for removing oil from a paper, board or finishing machine roll, which equipment comprises devices for collecting the oil in a suitable location inside the roll and a pump for pumping the oil from that location into an oil collection vat, is that the said pump is a self-priming centrifugal pump.

In the method according to the invention, oil removal takes place in a controlled manner and quickly in a small space. According to one preferred embodiment of the invention, each loading shoe contains a guide as wide as the shoe for creating an oil jet, while the receiving oil vat with its auxiliary guides and outlet pipe is essentially as wide as the inner shell of the roll.

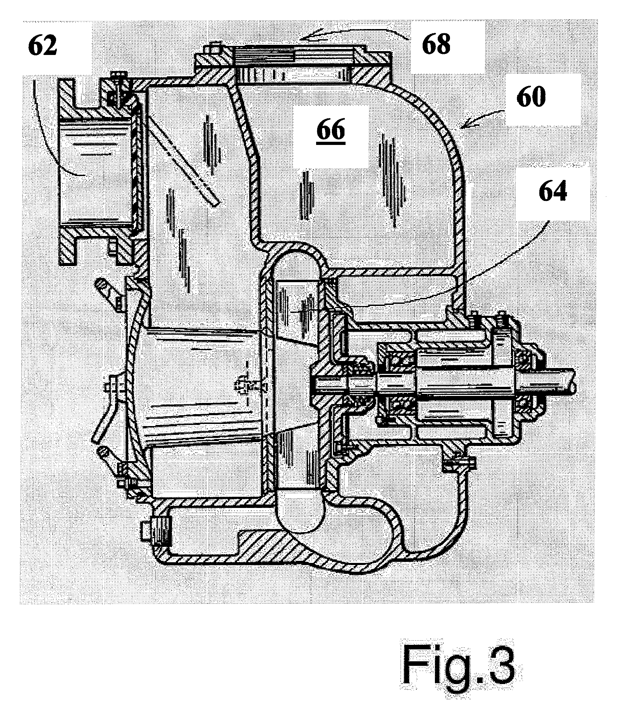

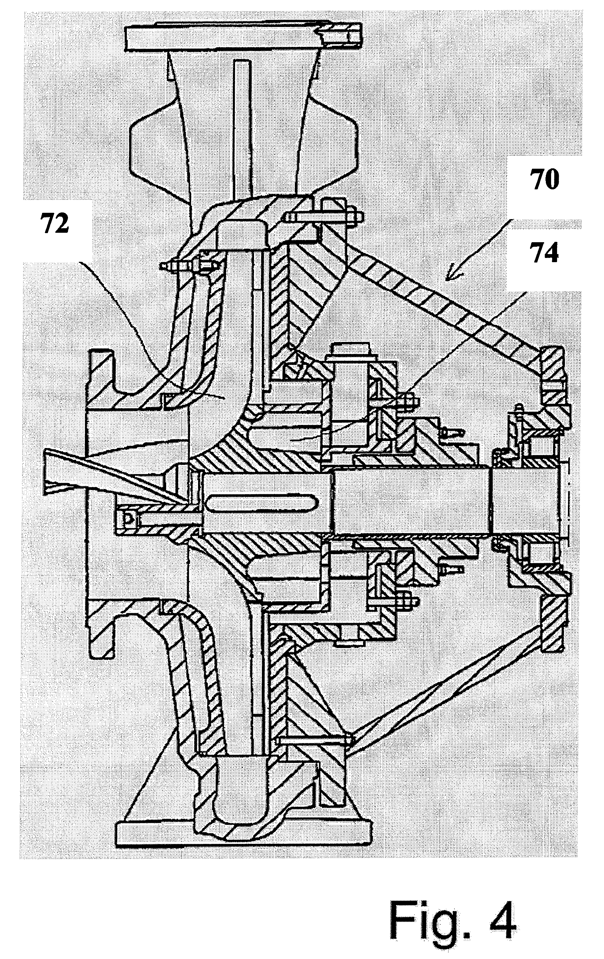

The self-priming centrifugal pump used in the invention can be for example of the type shown in Figure 3, where the air is led to the outlet flow of the pump, or of the type shown in Figure 4, where air is separated by means of an internal vacuum pump and led away from the oil line.

The other characteristic features of the method and equipment according to the invention are disclosed in the enclosed claims.

In what follows, the method and equipment according to the invention are described in more detail by making reference to the enclosed figures, where:
Figure 1 is a cross-section of a roll which comprises an oil removal arrangement according to the invention, relating to the loading shoes,
Figure 2 is a partial enlargement of the cross-section at the loading shoe, more exactly of the oil removal arrangement installed at the side of the loading shoe,
Figure 3 shows a pump alternative applied in the method and equipment according to the invention,
Figure 4 shows another pump alternative applied in the method and equipment according to the invention,
Figure 5 shows the location of the self-priming centrifugal pump according to one preferred embodiment of the invention for oil removal from the roll,
Figure 6 shows a pump connection according to another preferred embodiment of the invention, and
Figure 7 shows a pump connection according to a third preferred embodiment of the invention.
Figure 8 shows a pump connection according to a fourth preferred embodiment of the invention.

Figure 1 shows a prior art variable crown roll 10, which has a dead shaft 12 and loading shoes 20 installed in conjunction with the dead shaft 12. The shell 11 of the roll is mounted on the shaft 12 with bearings 14. The reference number 20 here refers to the moving part of the loading shoes, with this moving part being in this case a hydraulically moved cylinder part. The loading shoes 20 press the roll shell 11 in a known manner, and oil supply systems relating to the loading shoes can be used for loading the roll shell from within in order to accomplish the desired deflection.

Figure 1 shows the loading shoes 20 and also the oil removal system arranged to work in conjunction with the shoes. Oil guides 13 installed at the side of the loading shoes extend to the inner surface of the roll shell. In accordance with Figure 1, the oil guides 13 are essentially as wide as the loading shoes 20, and the oil guides 13 guide the oil that travels along the inner surface of the roll shell 11 at the guides as an oil jet essentially in the radial direction into a vat 19.

The more detailed structure of the oil removal system is shown in Figure 2, which presents the cross-section of a roll in partial enlargement at the loading shoe. The loading shoe 20, or more exactly its cylinder part, moves in the radial direction as determined by the loading of the loading shoe, i.e. more precisely by the effect of the pressure of hydraulic oil supplied along the channel which runs downwards from the shaft 12. The oil guide 13 is fastened to this cylinder part with screws 18. The oil guide 13 ejects the oil into the oil vat 19, which is composed of the outlet pipe 15 and in this case of the sheet iron casing 14. The top part 14.1 of the casing forms an auxiliary guide, which turns the oil jet to the bottom of the vat, which contains a slot 16 connected to the outlet pipe 15. This slot 16 is slightly narrower than the guide plate 13 and the loading shoe 20. The outlet pipe 15 and vat 19 extend uniformly over the entire width of the row of loading shoes (see Figure 1). From the outlet pipe 15, the oil is led to an external outlet channel by means of a connecting pipe 17. Oil removal as such can take place at overpressure or vacuum. The overpressure is achieved by supplying compressed air into the roll, while the vacuum is achieved by means of a suction pump connected to the outlet pipe.

Figure 3 presents a centrifugal pump suited for use in the method according to the invention. This is a self-priming centrifugal pump 60 used for example as a so-called fire pump, discussed in more detail in publication GB-1 464 027, among others. The said pump is so constructed that the suction opening 62 of the pump is clearly higher than the impeller 64 of the pump. Moreover, the volute of the pump opens to a larger space 66, where the actual discharge opening 68 of the pump is located. This type of construction results in that the pump needs to be filled with liquid before the first start-up so that upon starting, the pump starts to pump liquid first from the volute to the said larger space and from there to the discharge opening. If liquid flows in this case into the pump through the suction opening 62 of the pump, the pump works like an ordinary centrifugal pump. If, on the other hand, at least some gas flows into the pump through the suction opening 62, the impeller 64 of the pump mixes air with the liquid already present in the pump so that the pump pumps a mixture of liquid and air into the said larger space 66. Upon entering the larger space, the gas is separated from the liquid and the gas flows first to the discharge opening 68 of the pump. If only air comes from the suction opening 62 of the pump, usually only air is discharged through the discharge opening 68 of the pump while the liquid is returned to the bottom edge of the casing and from there again into the volute.

Figure 4 shows a centrifugal pump 70 known from publication WO-A1-99/66209, with the centrifugal pump 70 being equipped with a vacuum pump 74 located on the same shaft with the centrifugal impeller 72. The impeller of such a centrifugal pump usually has holes which are relatively close to the hub of the impeller and which go through the disc of the impeller so that air or other gas accumulated in front of the impeller can flow into the space behind the impeller. This flow of gas is facilitated by the vacuum created by the vacuum pump 74, which is almost without exception a liquid ring pump in these solutions. The characteristic feature of this pump solution is that the gas or air separated by the vacuum pump 74 is led, if necessary, to its own further processing separately from the actual liquid pumped. However, in some solutions the separated gas is returned at a suitable point in the process into the line or device processing the pumped liquid.

Another similar solution which works in principle in the same way is a centrifugal pump in conjunction of which there is a vacuum pump but with a separate shaft and drive unit. This is the only difference to the above-described pump solution, because in this latter solution, too, the impeller of the centrifugal pump has holes through which gas is sucked into the space behind the impeller, with this space having a connection for the vacuum pump.

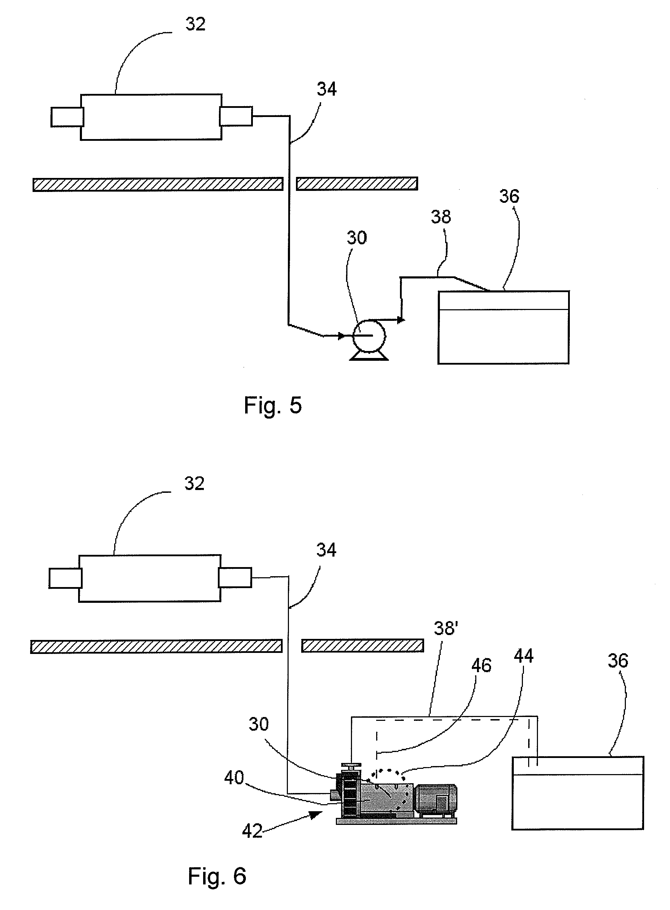

Figure 5 shows a schematic illustration of a solution according to one preferred embodiment of the invention, where the self-priming centrifugal pump 30 is located in conjunction with the roll 32 in order to remove oil from the roll. In accordance with the figure, the centrifugal pump 30 is located in this embodiment somewhere below the roll 32 in a suitable location so that the placing of the pump itself or of the related piping does not impede other operations around the paper machine. The equipment presented works so that oil collection into a specific vat (which corresponds to the vat 19 in Figure 2) is arranged inside the roll 32 for example as shown in Figure 2, and the suction pipe 34 of the pump 30 is arranged into the vat in a suitable manner. The suction pipe 34 can lead, for example, to a recess located at the bottom of the vat, into which the oil accumulates. As the pump 30 is running, it sucks both the oil and air accumulated in the vat. Depending on the type of the pump, it either mixes the air with the oil (pump of type shown in Figure 3) or separates the air into a flow of its own (pump of type shown in Figure 4). In both cases, the pump 30 pumps the oil back into the vat 36 of the hydraulic unit or to some other desired location via pipe 38.

Figure 6 shows one special solution which is in principle of the type of the pump illustrated in Figure 4. In this pump 30', the vacuum pump 40 which is installed on the same shaft with the impeller 42 of the centrifugal pump is located a little farther from the impeller 42 so that there is no direct connection from the impeller 42 to the vacuum pump 40, but this connection is arranged by means of the external circulation 44 of the pump. In other words, the suction created by the vacuum pump 40 is led along the pipe 44 into the space behind the impeller 42, and the vacuum thus created sucks gas from in front of the impeller 42 into this space. In the embodiment shown in the figure, the gas, i.e. air, and the oil drops traveling with it are returned into the hydraulic unit vat 36 in a separate pipe 46 while at the same time the oil is returned along a separate pipe 38'.

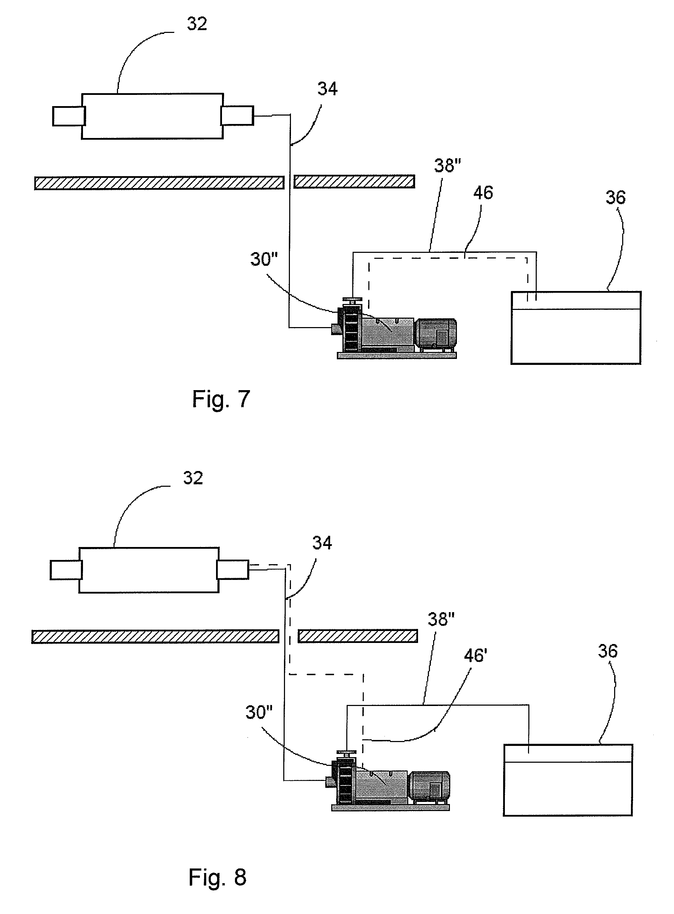

Figure 7 presents a slightly simpler solution, i.e. in fact the use of the pump shown in Figure 4 for removing oil from the roll 32. In this pump solution, the vacuum pump is located so close to the impeller of the centrifugal pump that the suction of the pump is exerted directly in the space behind the impeller without external piping, with the pump sucking air into the space from in front of the impeller. Just like in the previous embodiment, the gas, i.e. air, and the oil drops traveling with it are returned into the hydraulic unit vat, more precisely into the oil collection vat 36, in a pipe 46 separately from the oil, which is returned, as above, along the pipe 38'.

The solution presented in both Figures 6 and 7 reduces the air content of the oil returned to the hydraulic unit as compared to almost any previously known solution. In the solutions of Figures 6 and 7, the separated air can also be processed in other ways than by returning it to the oil tank of the hydraulic unit. One way is to arrange a chamber close to the pump so that oil drops are separated in the chamber from the air separated by the pump and the air is released from the system through a breather. Another way, presented in Figure 8, to process the said air separated by the pump is to return it back into the roll to be used as replacement air. In other words, the air replaces that air which has been removed from the roll by the pump together with the oil. In this way, the oil traveling with the air is returned along a pipe 46' to a location where it causes no inconvenience. Moreover, the above solution is most often the most feasible in practice, because it requires the shortest piping since, in practice, the roll 32 is located closer to the pump 30" than the hydraulic unit.

However, in view of what has been presented above, it must be noted that even though the centrifugal pump is located below the roll in all of the figures describing the invention, it is fully possible to locate the pump at the same level as the roll or even at a level above the roll. Since the pump is capable of also pumping air, the location of the pump can be chosen freely. It should also be noted that since prior art technology, including the above-mentioned publication FI-B-115700, includes several different ways in which to collect the oil as a "pool" inside the roll, the present invention does not provide a more detailed description of what types of equipment are actually used for collecting the oil inside the roll, but all such ways are suited for use in conjunction with the present invention, where oil is collected into a space from where it can be sucked in the manner according to the invention.

## Claims

1. Method for removing oil from a paper, board or finishing machine roll, in which method the oil accumulating inside the roll (10) is collected in a suitable location (19) inside the roll (10) and removed from there with a pump into an oil collection vat (35), **characterized in that** the oil or oil and air are removed from inside the roll (32) using a self-priming centrifugal pump (30, 30', 30"; 60, 70).

2. Method according to claim 1, **characterized in that** the oil or oil and air removed from the roll (32) by the pump (30, 30', 30"; 60, 70) is taken into an oil collection vat (36).

3. Method according to claim 1 or 2, **characterized in that** the air sucked from the roll (32) by the pump (30, 30', 30"; 60) is mixed in the pump (30, 30', 30"; 60) with the oil.

4. Method according to claim 1, **characterized in that** the air sucked from the roll (32) by the pump (30, 30', 30"; 70) is taken as a separate flow into an oil collection vat (36).

5. Method according to claim 1, **characterized in that** the air sucked from the roll (32) by the pump (30, 30', 30"; 70) is returned as a separate flow into the roll (32) as replacement air.

6. Equipment for removing oil from a paper, board or finishing machine roll, which equipment comprises devices (19) for collecting the oil in a suitable location inside the roll (32) and a pump for pumping the oil from that location into an oil collection vat (36), **characterized in that** the said pump is a self-priming centrifugal pump (30, 30', 30"; 60, 70).

7. Equipment according to claim 6, **characterized in that** the said pump (30, 30', 30"; 60, 70) is equipped with devices (62, 64, 66, 68; 72) for sucking air from the roll (32).

8. Equipment according to claim 6 or 7, **characterized in that** the said pump (30, 30', 30"; 70) is equipped with a vacuum pump (74).

9. Equipment according to claim 6, 7 or 8, **characterized in that** the said pump (30, 30', 30"; 70) is equipped with a vacuum pump (74) located on the same shaft with the impeller (72) of the pump (70).

10. Equipment according to claim 6 or 7, **characterized in that** the said pump (30, 30', 30"; 60) is equipped with devices for mixing air with the oil in the said pump (30, 30', 30"; 60).

11. Equipment according to claim 6, 7, 8 or 9, **characterized in that** the pump (30, 30', 30"; 70) is connected to the oil collection vat (36) with both an oil pipe (38') and an air pipe (46).

12. Equipment according to claim 6, 7, 8 or 9, **characterized in that** the pump (30, 30', 30"; 70) is connected both to the oil collection vat (36) with an oil pipe (38') and to the roll (32) with an air pipe for returning oil-containing air into the roll as replacement air.
